# EUROPEAN PATENT SPECIFICATION

(11) **EP 2 148 405 B1**
(45) Date of publication and mention of the grant of the patent: **15.05.2019**
(21) Application number: 09009433.5
(22) Date of filing: 21.07.2009
(51) Int. Cl.: H02J 7/00, H01M 10/42, H01M 10/46

(54) **A charging system capable for information rewriting**
Ein Ladesystem, das zum Umschreiben von Informationen geeignet ist
Un système de chargement capable de réécrire l'information

(30) Priority: 25.07.2008 JP 2008192456
(43) Date of publication of application: 27.01.2010
(73) Proprietor: Makita Corporation, Anjo-shi, Aichi-ken 446-8502 (JP)
(72) Inventor: Okabayashi, Hisakazu, Anjo-shi, Aichi-ken 446-8502 (JP)
(74) Representative: Kramer Barske Schmidtchen Patentanwälte PartG mbB

(56) References cited:
- EP-A1- 1 253 663
- JP-A- 2006 197 699
- JP-A- 2007 249 748
- US-A- 5 596 567
- US-A1- 2003 090 239
- US-A1- 2007 077 964
- US-A1- 2007 149 255
- US-A1- 2007 188 135

## Description

### Background

The present invention relates to a technique for rewriting information stored in a battery and a battery charger.

In part of a general charging system which includes a battery and a battery charger, the battery and the battery charger respectively have storage media, where charge characteristic data of the battery are stored.

Here, charge characteristics required are diversified depending on how the battery is used. Because of this, it is preferable that the charge characteristic data, which are stored in the battery and the battery charger, can be changed as appropriate.

An example of technique devised to change charge characteristic data as appropriate is disclosed in Unexamined Patent Application Publication No. 2001-298870. In the example, a user connects a battery and a battery charger separately to a terminal device connected to the Internet. Then, the user operates the terminal device to obtain charge characteristic data from a server device on the Internet, and rewrites data stored in the battery or the battery charger, which are connected to the terminal device, based on the data obtained from the server device. JP 2006 197699 A shows the features of the preamble of claim 1.

### SUMMARY

In the above example, it is far from easy for any user to rewrite data since the user is required to have a knowledge of terminal device operation and the like.

In one aspect of the present invention, it is preferable for a user to easily rewrite information stored in a battery and a battery charger.

According to a charging system of claim 1, a user is not required to separately carry out an operation to rewrite the information since one of the first information stored in the battery and the second information stored in the battery charger is rewritten based on the other only by electrically connecting the battery and the battery charger.

Consequently, the user can easily rewrite the programs for controlling the charging of the battery with computers inside the battery and/or the battery charger. This enables the user to easily change charge characteristics of the battery and the battery charger, for example.

Further preferred embodiments are presented in the dependent claims.

The computers may also be microcomputers.

### BRIEF DESCRIPTION OF THE DRAWINGS

The present invention will now be described by way of example with reference to the accompanying drawings, in which:
FIG. 1 is a perspective view of a battery according to the present invention showing an exterior appearance of the battery;
FIG. 2 is a perspective view of a battery charger according to the present invention showing a front-side exterior appearance of the battery charger;
FIG. 3 is a perspective view of the battery charger showing a back-side exterior appearance of the battery charger;
FIG. 4 is a block diagram simply showing an electrical configuration of the battery and an electrical configuration of the battery charger;
FIG. 5 is a flowchart showing a flow of a first rewrite process;
FIG. 6 is a flowchart showing a flow of a second rewrite process;
FIG. 7 is a flowchart showing a flow of a write source process; and
FIG. 8 is a flowchart showing a flow of a write destination process.

### DETAILED DESCRIPTION OF THE PREFERRED EMBODIMENTS

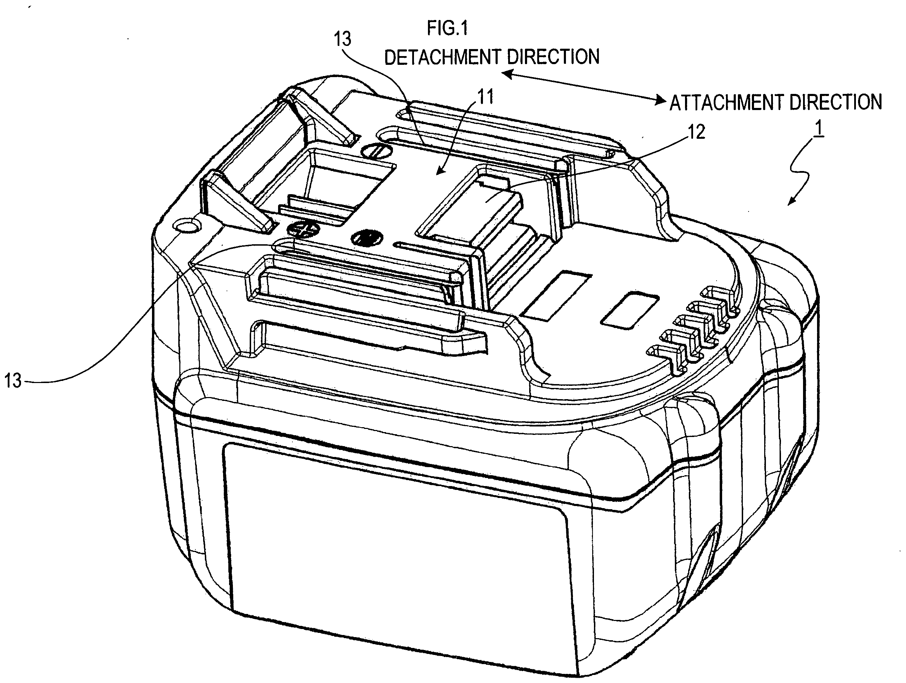

As shown in Fig. 1, a battery 1 is provided with an apparatus attachment portion 11 on an upper side thereof. The apparatus attachment portion 11 is configured to be attachable to and detachable from a battery charger by being slided on the battery charger. In the vicinity of the central part of the apparatus attachment portion 11, there are provided a communication connector 12 and a pair of electrode connectors 13. More specifically, the communication connector 12 is arranged between the pair of electrode connectors 13.

The communication connector 12 is configured as a male connector, which protrudes toward an attachment direction to the battery charger. The pair of electrode connectors 13 is configured to allow a positive side electrode terminal and a negative side electrode terminal on the side of the battery charger to be slided inside the pair of electrode connectors 13.

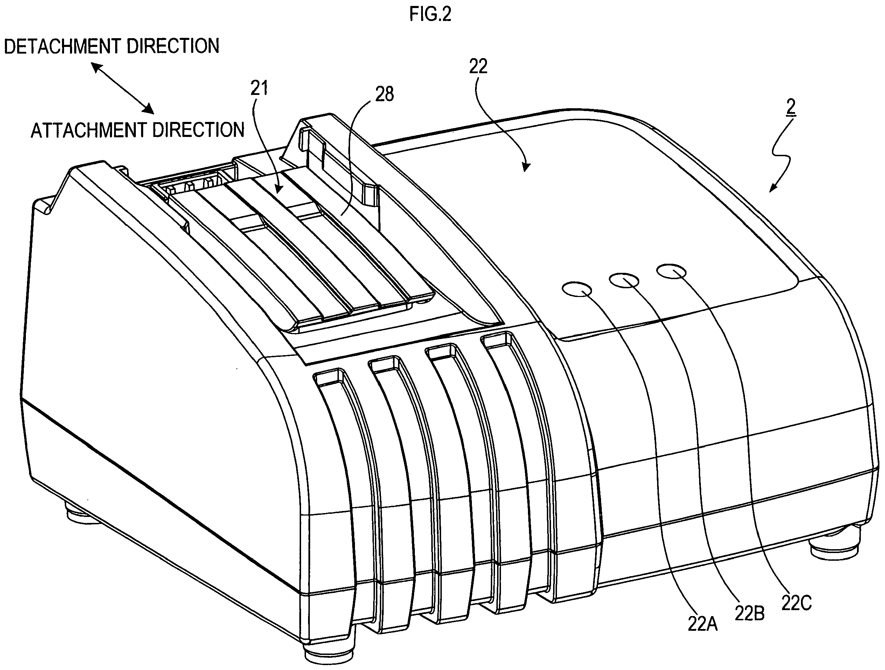

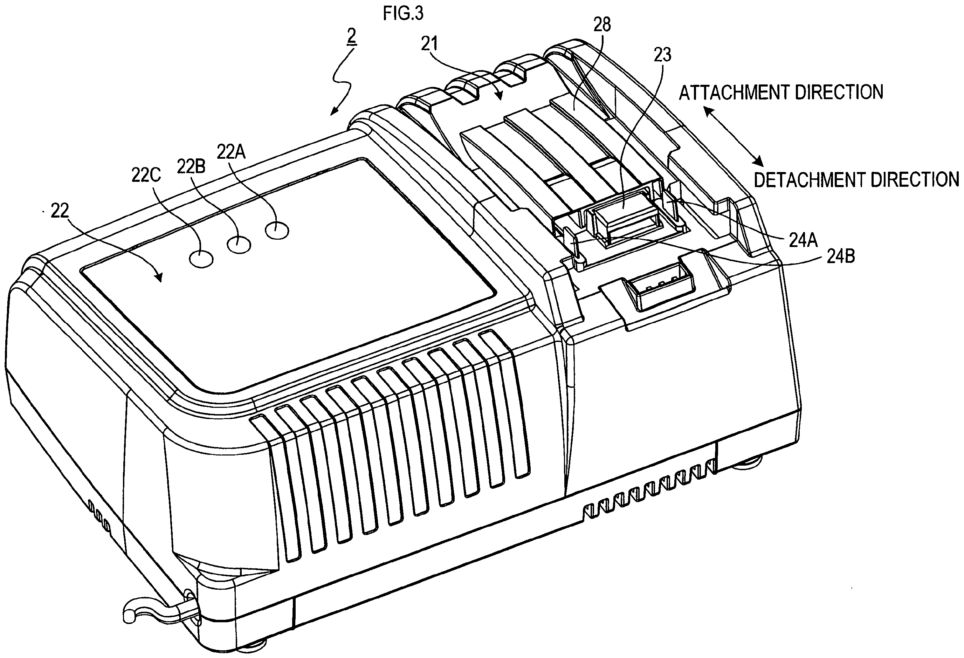

As shown in Figs. 2 and 3, a battery charger 2 is provided with a battery attachment portion 21 and a display portion 22 on an upper side thereof.

The battery 1 is attached to the battery attachment portion 21 with the apparatus attachment portion 11 of the battery 1 facing downward. More specifically, the battery attachment portion 21 is configured to allow the apparatus attachment portion 11 of the battery 1 to be slided on the battery charger 2 while guiding the battery 1 along the attachment direction to the battery charger 2. And the battery attachment portion 21 is provided with a protection cover 28, a communication connector 23, a positive side electrode terminal 24A, and a negative side electrode terminal 24B.

More specifically, the protection cover 28, which is slidably provided on the battery attachment portion 21, covers the communication connector 23, the positive side electrode terminal 24A, and the negative side electrode terminal 24B when the battery 1 is yet to be attached to the battery attachment portion 21, whereas the protection cover 28 exposes the communication connector 23, the positive side electrode terminal 24A, and the negative side electrode terminal 24B to the battery 1 when the battery 1 is attached to the battery attachment portion 21.

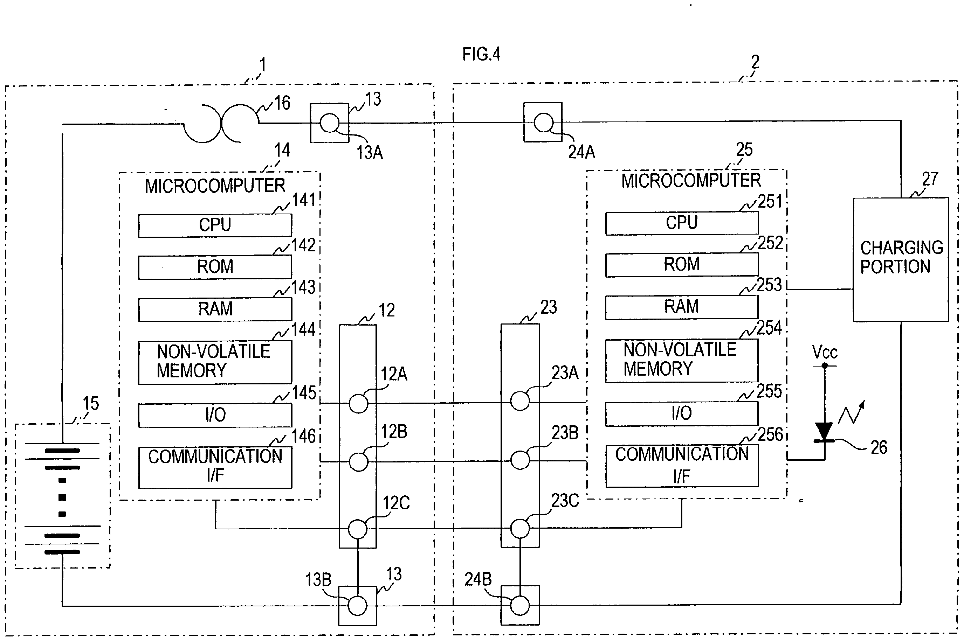

The communication connector 23 is arranged between the positive side electrode terminal 24A and the negative side electrode terminal 24B. The communication connector 23 is configured as a female connector, which is fitted with the above-described communication connector 12 of the battery 1. Furthermore, a plurality of connection terminals, which are electrically connected to a plurality of communication terminals provided in the communication connector 12, are provided inside the communication connector 23. The positive side electrode terminal 24A, which is a plate-shaped terminal protruding upward of the battery charger 2, is guided by one of the electrode connectors 13 of the battery 1, and is electrically connected to a positive side electrode terminal 13A (see Fig. 4) provided inside the electrode connector 13. The negative side electrode terminal 24B, which is a plate-shaped terminal protruding upward of the battery charger 2 just as the positive side electrode terminal 24A, is guided by the other of the electrode connectors 13 of the battery 1, and is electrically connected to a negative side electrode terminal 13B (see Fig. 4) provided inside the electrode connector 13.

The display portion 22, which includes three indicator lamps 22A, 22B, and 22C, is configured to display a status of the battery 1 and the battery charger 2 with the indicator lamps 22A, 22B, and 22C. More specifically, the indicator lamps 22A and 22B are lamps for indicating a remaining amount of electric power in the battery 1, and the indicator lamp 22C is a lamp for indicating whether or not a rewrite of a program stored in the battery 1 and a rewrite of a program stored in the battery charger 2 is being carried out.

As shown in Fig. 4, the battery 1 is provided with a microcomputer 14. The microcomputer 14, which is configured as a so-called one-chip microcomputer, has at least a CPU 141, a ROM 142, a RAM 143, a non-volatile memory 144, an input/output (I/O) port 145, and a communication interface (I/F) 146 integrated thereinto.

The non-volatile memory 144 may be any memory element as long as the same can rewrite a memory content, and it is possible to use, for example, an EEPROM and a flash memory as the non-volatile memory 144. In the non-volatile memory 144 of the present embodiment, a program for controlling the charging of the battery 1 (a charging control program) by the microcomputer 14 is rewritably stored. The charging control program includes a version information indicating an update history of the charging control program.

The microcomputer 14 is connected to the plurality of communication terminals provided in the communication connector 12 of the battery 1. More specifically, the microcomputer 14 is connected to a temperature data terminal 12A, a data communication terminal 12B, and a GND terminal 12C.

The temperature data terminal 12A is a terminal for outputting to the battery charger 2 an electrical signal (a temperature signal) outputted from the microcomputer 14 based on a temperature detected by a thermistor (not shown) provided in the battery 1.

The data communication terminal 12B is a terminal for outputting a data signal outputted from the microcomputer 14 to the battery charger 2 and for inputting a data signal outputted from the battery charger 2 to the microcomputer 14.

The GND terminal 12C is a terminal where a reference potential for communication signals transmitted between the battery 1 and the battery charger 2 is set.

The battery 1 includes a cell portion 15, where a plurality of series-connected cells are provided. A positive side of the cell portion 15 is connected to the above-described positive side electrode terminal 13A of the battery 1 via a fuse 16, whereas a negative side of the cell portion 15 is connected to the above-described negative side electrode terminal 13B of the battery 1. The negative side electrode terminal 13B is electrically connected to the above-described GND terminal 12C, and sets a potential of the GND terminal 12C to a potential of a negative electrode of the cell portion 15 (i.e., a potential of a negative electrode of the battery 1).

On the other hand, the battery charger 2 includes a microcomputer 25. The microcomputer 25, which is configured as a one-chip microcomputer just as the microcomputer 14, has at least a CPU 251, a ROM 252, a RAM 253, a non-volatile memory 254, an I/O port 255, and a communication I/F 256 integrated thereinto.

The non-volatile memory 254 may be any memory element, just as the non-volatile memory 144, as long as the same can rewrite memory content, and it is possible to use, for example, an EEPROM and a flash memory as the non-volatile memory 254. In the non-volatile memory 254 of the present embodiment, a program for controlling the charging of the battery 1 (a charging control program) by the microcomputer 25 is rewritably stored. The charging control program includes a version information indicating an update history of the charging control program.

The microcomputer 25 is connected to the plurality of connection terminals provided in the above-described communication connector 23 of the battery charger 2. More specifically, the microcomputer 25 is connected to a temperature data terminal 23A, a data communication terminal 23B, and a GND terminal 23C.

The temperature data terminal 23A, which is electrically connected to the temperature data terminal 12A of the battery 1 when the battery 1 is attached to the battery charger 2, is a terminal for inputting the temperature signal outputted from the microcomputer 14 of the battery 1 to the microcomputer 25.

The data communication terminal 23B, which is electrically connected to the data communication terminal 12B of the battery 1 when the battery 1 is attached to the battery charger 2, is a terminal for inputting the data signal outputted from the microcomputer 14 of the battery 1 to the microcomputer 25 and for outputting the data signal outputted from the microcomputer 25 to the microcomputer 14.

The GND terminal 23C, which is electrically connected to the GND terminal 12C of the battery 1 when the battery 1 is attached to the battery charger 2, is a terminal where the reference potential for communication signals transmitted between the battery 1 and the battery charger 2 is set.

The battery charger 2 includes an LED 26 which is a light source of the indicator lamp 22C. The LED 26 is connected to the microcomputer 25 so as to be turned on and off in accordance with a command from the microcomputer 25. More specifically, in the LED 26, an anode of the LED 26 is connected to a positive electrode Vcc of a power source of the battery charger 2, and a cathode of the LED 26 is connected to the microcomputer 25. Although a plurality of LEDs, which are light sources of the indicator lamps 22A and 22B are not shown in Fig. 4, the battery charger 2 practically includes the plurality of LEDs, which are the light sources of the indicator lamps 22A and 22B.

Furthermore, the battery charger 2 includes a charging portion 27 for supplying electric power to the battery 1 to charge the battery 1. More specifically, a positive side of the charging portion 27 is connected to the above-described positive side electrode terminal 24A of the battery charger 2. That is, the positive side of the charging portion 27 is electrically connected to a positive electrode of the battery 1 (the cell portion 15) via the positive side electrode terminal 24A of the battery charger 2 and the positive side electrode terminal 13A of the battery 1 when the battery 1 is attached to the battery charger 2.

On the other hand, a negative side of the charging portion 27 is connected to the above-described negative side electrode terminal 24B of the battery charger 2. That is, the negative side of the charging portion 27 is electrically connected to the negative electrode of the battery 1 (the cell portion 15) via the negative side electrode terminal 24B of the battery charger 2 and the negative side electrode terminal 13B of the battery 1 when the battery 1 is attached to the battery charger 2. Moreover, the negative side electrode terminal 24B is electrically connected to the above-described GND terminal 23C, and sets a potential of the GND terminal 23C to a potential of a negative electrode of the charging portion 27 (i.e., a potential of the negative electrode of the battery 1).

The charging portion 27 is connected to the microcomputer 25, and configured to charge the battery 1 in accordance with a command from the microcomputer 25.

Hereinafter, processes according to the present invention, which are executed by the CPU 141 of the battery 1 and the CPU 251 of the battery charger 2, will be described.

The CPU 251 initiates a first (primary) rewrite process when detecting that the battery 1 is attached to the battery charger 2 based on the above-described temperature signal.

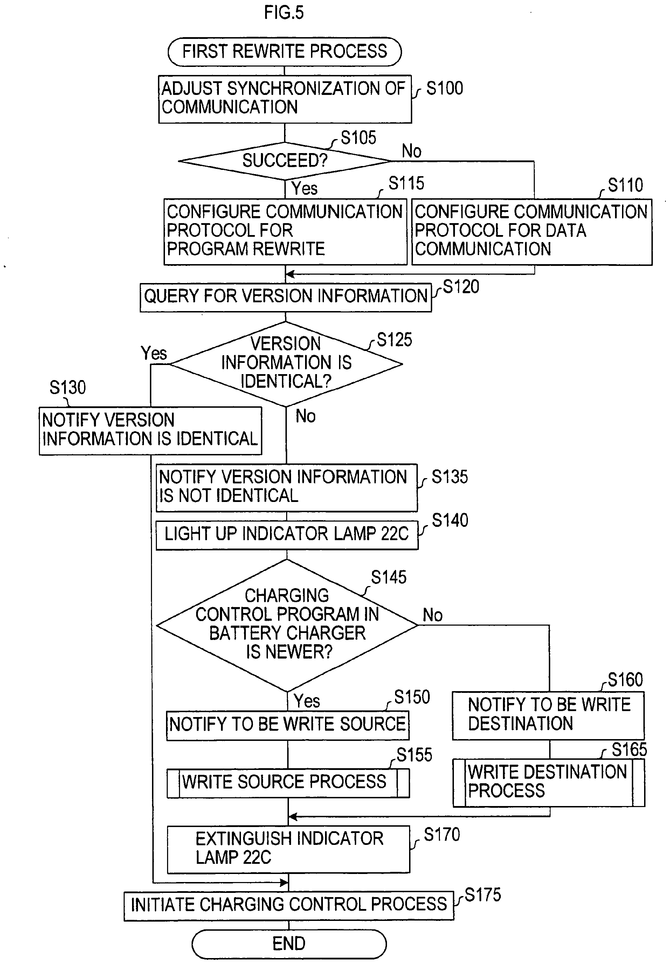

As shown in Fig. 5, in the present process, a synchronization of communication with the battery 1 is initially adjusted (S100) based on a preconfigured communication protocol (a communication protocol for program rewrite) to rewrite a charging control program, which is different from a mere communication protocol for data communication. This communication protocol for program rewrite is so configured as to rewrite the charging control program in less time than required by the communication protocol for data communication.

When the synchronization of communication with the battery 1 based on the communication protocol for program rewrite fails (S105: No), a communication protocol used to communicate with the battery 1 is configured to the communication protocol for data communication (S110), and the process is forwarded to S120 to be described below.

When the synchronization of communication with the battery 1 based on the communication protocol for program rewrite succeeds (S105: Yes), the communication protocol used to communicate with the battery 1 is configured to the communication protocol for program rewrite (S115), and the battery 1 (more specifically, the CPU 141 of the battery 1) is queried for the version information of the charging control program stored in the battery 1 (S120).

It is then determined whether or not the version information received from the battery 1 is identical with the version information of the charging control program stored in the non-volatile memory 254 of the battery charger 2 (S125). When the version information is identical (S125: Yes), the battery 1 is notified that the version information is identical (S130), and the process is immediately forwarded to S175 to be described below.

When the version information is not identical (S125: No), the battery 1 is notified that the version information is not identical (S135), and then the indicator lamp 22C is lit up (S140) by turning on the LED 26. The lighting-up of the indicator lamp 22C enables the user to grasp that the rewrite of the charging control program is to be carried out.

Based on the version information received from the battery 1 and the version information of the charging control program stored in the non-volatile memory 254 of the battery charger 2, it is determined whether or not the charging control program in the battery charger 2 is newer than the charging control program in the battery 1 (S145).

When the charging control program in the battery charger 2 is newer than the charging control program in the battery 1 (S145: Yes), the battery 1 is notified that the battery charger 2 is to be a write source of the charging control program (S150), and after a preconfigured write source process is executed (S155), the process is forwarded to S170 to be described below.

When the charging control program in the battery 1 is newer than the charging control program in the battery charger 2 (S145: No), the battery 1 is notified that the battery charger 2 is to be a write destination of the charging control program (S160), and after a preconfigured write destination process is executed (S165), the indicator lamp 22C is extinguished (S170) by turning off the LED 26. The extinction of the indicator lamp 22C enables the user to grasp that the rewrite of the charging control program has been completed.

When the indicator lamp 22C is extinguished, a charging control process on the side of the battery charger 2, which controls the charging of the battery 1 in accordance with the charging control program, is initiated (S175), and the present process is terminated.

The CPU 141 of the battery 1 initiates a second (secondary) rewrite process when detecting that the battery 1 is attached to the battery charger 2 based on the above-described temperature signal.

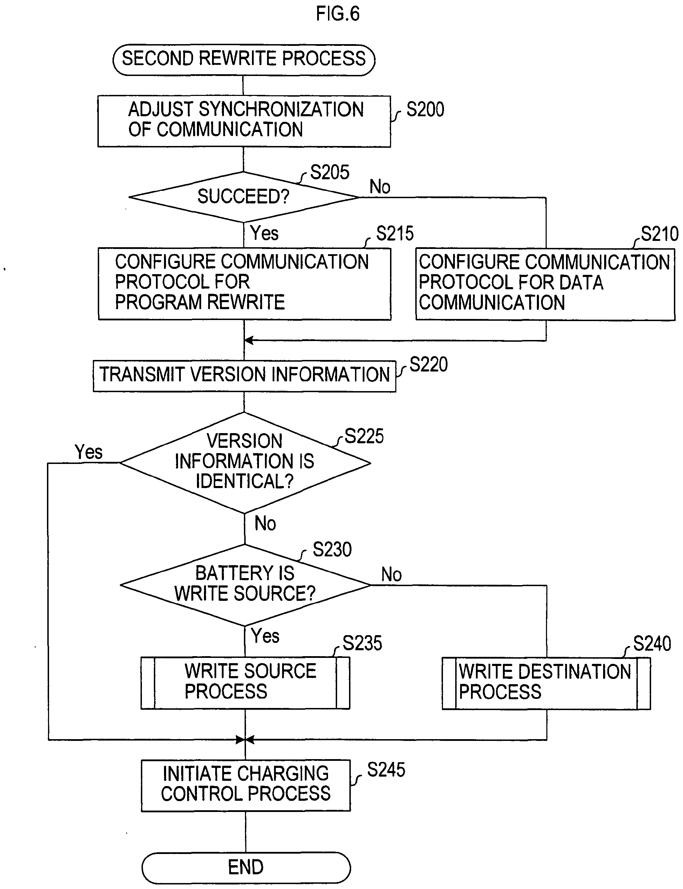

As shown in Fig. 6, in the present process, a synchronization of communication with the battery charger 2 is initially adjusted (S200) based on the above-described communication protocol for program rewrite.

When the synchronization of communication with the battery charger 2 based on the communication protocol for program rewrite fails (S205: No), a communication protocol used to communicate with the battery charger 2 is configured to the communication protocol for data communication (S210), and the process is forwarded to S220 to be described below.

When the synchronization of communication with the battery charger 2 based on the communication protocol for program rewrite succeeds (S205: Yes), a communication protocol used to communicate with the battery charger 2 is configured to the communication protocol for program rewrite (S215).

Then, in response to the query for the version information from the battery charger 2 (the above-described S120), the version information of the charging control program stored in the non-volatile memory 144 is transmitted to the battery charger 2 (S220).

It is then determined whether or not the version information in the battery 1 and the version information in the battery charger 2 are identical (S225) based on the notification from the battery charger 2 (the above-described S130 and S135). When the version information in the battery 1 and the version information in the battery charger 2 are identical (S225: Yes), the process is immediately forwarded to S245 to be described below.

When the version information in the battery 1 and the version information in the battery charger 2 are not identical (S225: No), it is determined whether or not the battery 1 is to be the write source of the charging control program (S230) based on the notification from the battery charger 2 (the above-described S150 and S160).

When the battery 1 is to be the write source (S230: Yes), after a preconfigured write source process is executed (S235), the process is forwarded to S245 to be described below.

When the battery 1 is to be the write destination (S230: No), after a preconfigured write destination process is executed (S240), a charging control process on the side of the battery 1, which controls the charging of the battery 1 in accordance with the charging control program, is initiated (S245), and the present process is terminated.

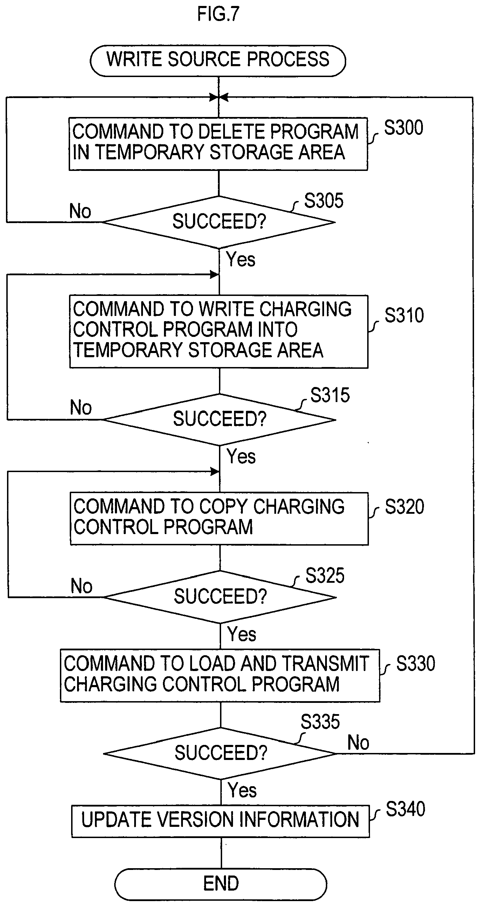

As shown in Fig. 7, in the above-described write source processes (S155 and S235), a command is initially issued to the write destination to delete a program stored in a temporary storage area (RAM) (S300) of the write destination specifying an address of the temporary storage area.

Subsequently, it is determined whether or not a notification that the program is successfully deleted has been received from the write destination (S305), and when the notification has not been received (S305: No), S300 is executed again.

When the notification has been received (S305: Yes), a command is issued to the write destination to write the charging control program in the write source into the temporary storage area of the write destination (S310) specifying the address of the temporary storage area of the write destination.

Subsequently, it is determined whether or not a notification that the program is successfully written has been received from the write destination (S315), and when the notification has not been received (S315: No), S310 is executed again.

When the notification has been received (S315: Yes), a command is issued to the write destination to copy the charging control program in the temporary storage area of the write destination into the non-volatile memory of the write destination (S320) specifying the address of the temporary storage area of the write destination and an address of the non-volatile memory of the write destination. By copying the program into the non-volatile memory, the prior charging control program stored in the non-volatile memory before then is overwritten with the charging control program stored in the temporary storage area.

Subsequently, it is determined whether or not a notification that the program is successfully copied has been received from the write destination (S325), and when the notification has not been received (S325: No), S320 is executed again.

When the notification has been received (S325: Yes), a command is issued to the write destination to load the charging control program stored in the non-volatile memory and transmit the same to the write source (S330) specifying the address of the non-volatile memory of the write destination. Then, by comparing the charging control program received from the write destination and the charging control program stored in the non-volatile memory of the write source, it is determined whether or not the charging control program is successfully written to the write destination (S335).

When the writing fails (S335: No), the above S300 is executed again. When the writing succeeds (S335: Yes), a command is issued to the write destination to update a version information of the charging control program written in the non-volatile memory of the write destination to the version information of the charging control program in the write source (S340), and the present process is terminated.

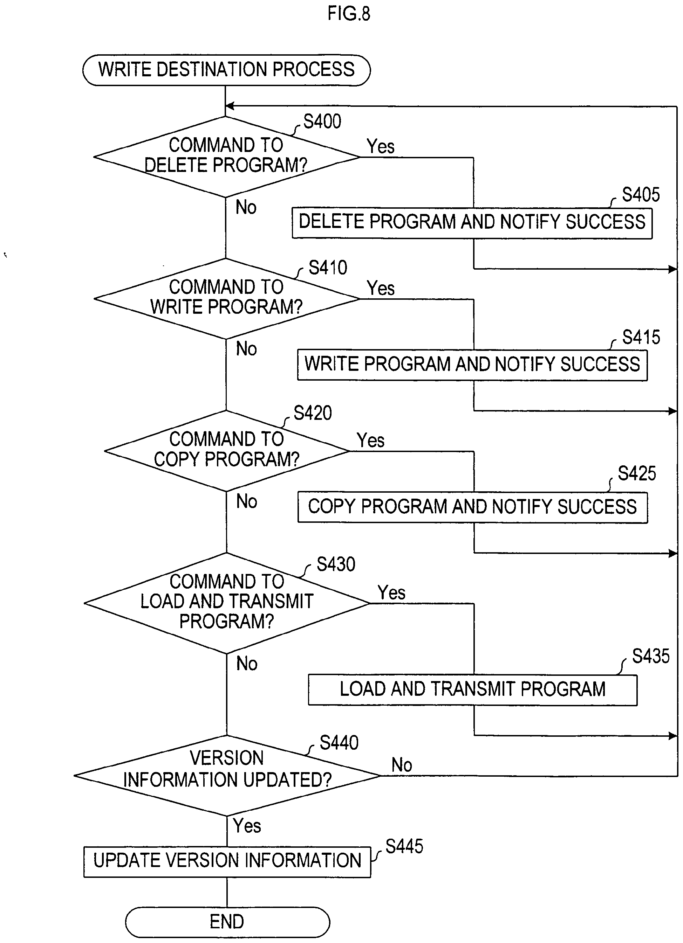

As shown in Fig. 8, in the above-described write destination processes (S165 and S240), it is initially determined whether or not the command has been issued from the write source to delete the program stored in the temporary storage area of the write destination (S400).

When the command to delete the program has been issued (S400: Yes), the program at the address specified by the write source is deleted, and after the write source is notified that the program is successfully deleted (S405), S400 is executed again.

When the command to delete the program has not been issued (S400: No), it is determined whether or not the command has been issued from the write source to write the charging control program in the write source into the temporary storage area of the write destination (S410).

When the command to write the program has been issued (S410: Yes), the charging control program in the write source is written into the address specified by the write source (the temporary storage area of the write destination), and after the write source is notified that the program is successfully written (S415), S400 is executed again.

When the command to write the program has not been issued (S410: No), it is determined whether or not the command has been issued from the write source to copy the charging control program in the temporary storage area of the write destination into the non-volatile memory of the write destination (S420).

When the command to copy the program has been issued (S420: Yes), the charging control program at the address of the temporary storage area of the write destination specified by the write source is copied into the address of the non-volatile memory of the write destination specified by the write source, and after the write source is notified that the program is successfully copied (S425), S400 is executed again.

When the command to copy the program has not been issued (S420: No), it is determined whether or not the command has been issued from the write source to load the charging control program in the non-volatile memory of the write destination and transmit the same to the write source (S430).

When the command to load and transmit the charging control program has been issued (S430: Yes), the charging control program at the address of the non-volatile memory of the write destination specified by the write source is loaded and transmitted to the write source (S435), and S400 is executed again.

When the command to load and transmit the charging control program has not been issued (S430: No), it is determined whether or not the command has been issued from the write source to update the version information (S440).

When the command to update the version information has not been issued (S440: No), S400 is executed again.

When the command to update the version information has been issued (S440: Yes), the version information of the charging control program in the non-volatile memory of the write destination is updated to the version information of the charging control program in the write source (S445), and the present process is terminated.

As described above, in the battery 1 and the battery charger 2 of the present embodiment, one of the charging control program stored in the battery 1 and the charging control program stored in the battery charger 2 is rewritten based on the other only by attaching the battery 1 to the battery charger 2 to electrically connect the battery 1 and the battery charger 2.

This eliminates a need for the user to separately carry out an operation to rewrite the charging control program.

Consequently, according to the present embodiment, the user can easily rewrite the charging control program stored in the battery 1 and the battery charger 2 only by sliding the battery 1 on the battery charger 2 to attach the battery 1 to the battery charger 2. In short, the user can easily change charge characteristics in the battery 1 and the battery charger 2.

According to the battery 1 and the battery charger 2 of the present embodiment, it is determined based on the version information whether the charging control program in the battery 1 should be rewritten or the charging control program in the battery charger 2 should be rewritten, whereby a possibility that a newer charging control program may be rewritten based on an older charging control program can be reduced.

According to the battery 1 of the present embodiment, as long as a new charging control program is stored in the battery 1, an old charging control program stored in a battery charger can be updated only by connecting the battery 1 to the battery charger.

According to the battery charger 2 of the present embodiment, as long as a new charging control program is stored in the battery charger 2, an old charging control program stored in a battery can be updated only by connecting the battery to the battery charger 2.

According to the battery 1 and the battery charger 2 of the present embodiment, when rewriting the charging control program, the charging control program in the write source is written into the temporary storage area of the write destination, and when the program has been successfully written into the temporary storage area, the program is written over the non-volatile memory of the write destination.

This reduces a possibility that the charging control program in the write destination may be rewritten based on an incomplete or erroneous charging control program caused by a failure in transmission between the battery 1 and the battery charger 2.

According to the battery charger 2 of the present embodiment, it is notified that the rewrite of the charging control program is in progress by keeping the indicator lamp 22C on during the rewrite of the charging control program, whereas it is notified that the rewrite of the charging control program has been completed by extinguishing the indicator lamp 22C upon completion of the rewrite of the charging control program, whereby the user can easily grasp whether or not the rewrite of the charging control program has been completed. This can reduce a possibility that the user may detach the battery 1 from the battery charger 2 although the rewrite of the charging control program has not been completed yet.

According to the battery 1 and the battery charger 2 of the present embodiment, battery charging is initiated after the rewrite of the charging control program has been completed, which can reduce a possibility that electrical noise caused by electric current flowing through the battery 1 and the battery charger 2 for the charging may affect the rewrite of the charging control program.

Although the embodiments of the present invention have been described above, it is to be appreciated that the present invention is not limited to the above embodiments and can be modified in various manners within the technical scope of the present invention, which is defined by the appended claims.

For example, although the completion of the rewrite of the charging control program is notified by extinguishing the lighted indicator lamp 22C in the above embodiment, it may be notified by sound, vibration, display, and the like.

Also, although the lamp for notifying that the rewrite of the charging control program has been completed is provided only in the battery charger 2 in the above embodiment, such a lamp may be also provided in the battery 1. In this case, the indicator lamp 22C may be eliminated from the battery charger 2.

In addition, although both of the battery 1 and the battery charger 2 are configured to be the write source and the write destination of the charging control program in the above embodiment, the battery 1 and the battery charger 2 may be configured so that one of the battery 1 and the battery charger 2 is to be the write source only and the other of the battery 1 and the battery charger 2 is to be the write destination only.

Further, although the charging control program is rewritten in the above embodiment, a program, data, and the like other than the charging control program may be rewritten.

It is explicitly stated that all features disclosed in the description and/or the claims are intended to be disclosed separately and independently from each other for the purpose of original disclosure. It is explicitly stated that all value ranges or indications of groups of entities disclose every possible intermediate value or intermediate entity for the purpose of original disclosure, in particular as limits of value ranges. The scope of protection is defined by the appended claims.

## Claims

1. A charging system capable for information rewriting, comprising
a battery (1),
a battery charger (2) which is adapted to charge the battery (1) by being detachably electrically connected to the battery (1),
a first storage unit (144) provided in the battery (1), the first storage unit being adapted to rewritably store a first information, and
a second storage unit (254) provided in the battery charger (2), the second storage unit being adapted to rewritably store a second information,
each of the battery (1) and the battery charger (2) including a computer (14; 25), **characterized in that**
at least one of the computers (14; 25) is adapted to rewrite any one information out of the first information stored in the first storage unit and the second information stored in the second storage unit based on the other information out of the first information and the second information when the battery (1) and the battery charger (2) are electrically connected,
the charging system further comprising
a protocol changing unit which is adapted to change a communication protocol between the battery (1) and the battery charger (2) from a first protocol to a second protocol when the at least one computer rewrites the one information, wherein the second protocol provides faster communication than the first protocol, and
a protocol control unit which is adapted to determine whether or not it is possible to change the communication protocol between the battery (1) and the battery charger (2) from the first protocol to the second protocol, to allow the protocol changing unit to operate when the change is determined to be possible, and to inhibit the protocol changing unit from operating when the change is determined to be impossible,
wherein
the first information is a program to be executed by the computer (14) in the battery (1), and the second information is a program to be executed by the computer (25) in the battery charger (2) and the programs are for controlling the charging of the battery (1) by the computer (14) in the battery (1) and the computer (25) in the battery charger (2).

2. The charging system according to claim 1, wherein
the computer in the battery is a first computer and the computer in the battery charger is a second computer,
the first computer is adapted to rewrite the second information stored in the second storage unit provided in the battery charger (2),
the second computer is adapted to rewrite the first information stored in the first storage unit provided in the battery (1), and
the charging system further comprises
a first determination unit provided in the battery (1), the first determination unit being adapted to determine whether or not the first information should be rewritten, based on a content of the first information and a content of the second information,
a first operation inhibiting unit provided in the battery (1), the first operation inhibiting unit being adapted to inhibit an operation of the first computer when the first determination unit determines that the first information should be rewritten,
a second determination unit provided in the battery charger (2), the second determination unit being adapted to determine whether or not the second information should be rewritten, based on the content of the first information and the content of the second information, and
a second operation inhibiting unit provided in the battery charger (2), the second operation inhibiting unit being adapted to inhibit an operation of the second computer when the second determination unit determines that the second information should be rewritten,

3. The charging system according to claim 2, wherein
the first information and the second information include an update information which is adapted to indicate update histories of the first information and the second information, and
at least one of the first determination unit and the second determination unit is adapted to refer to the update information included in the first information and the second information, and to make a determination based on the update information.

4. The charging system according to any of claims 1-3, wherein
at least one computer includes
a writing unit which is adapted, when rewriting the one information, to write the other information into one storage area other than another storage area where the one information is stored, in the storage unit out of the first storage unit and the second storage unit where the one information is stored,
a success determination unit which is adapted to determine whether or not a write by the writing unit succeeds, based at least on the other information written in the one storage area, and
an overwriting unit which is adapted to write the other information written in the one storage area by the writing unit over the another storage area where the one information is stored, when the success determination unit determines that the write by the writing unit succeeds.

5. The charging system according to any of claims 1-4, further comprising
at least one notification unit provided in at least one of the battery (1) and the battery charger (2), the at least one notification unit being adapted to notify a completion of a rewrite by the at least one computer when the rewrite has been completed.

6. The charging system according to any of claims 1-5, further comprising
a charge initiating unit provided in the battery charger (2), the charge initiating unit being adapted to initiate a charging of the battery (1) after a rewrite by the at least one computer has been completed,

## Patentansprüche

1. Ladesystem, das Informationen überschreiben kann, mit
einer Batterie (1),
einem Batterieladegerät (2), welches dazu angepasst ist, die Batterie (1) zu laden, indem es lösbar mit der Batterie (1) elektrisch verbunden ist,
einer ersten Speichereinheit (144), die bei der Batterie (1) vorgesehen ist, bei dem die erste Speichereinheit (144) dazu angepasst ist, überschreibbar eine erste Information zu speichern, und
einer zweiten Speichereinheit (254), die bei dem Batterieladegerät (2) vorgesehen ist, bei dem die zweite Speichereinheit dazu angepasst ist, eine zweite Information überschreibbar zu speichern,
die Batterie (1) und das Batterieladegerät (2) jeweils einen Computer (14; 25) aufweisen, **dadurch gekennzeichnet, dass**
zumindest einer der Computer (14; 25) dazu angepasst ist, irgendeine Information von der ersten Information, die in der ersten Speichereinheit gespeichert ist, und der zweiten Information, die in der zweiten Speichereinheit gespeichert ist, basierend auf der anderen Information von der ersten Information und der zweiten Information zu überschreiben, wenn die Batterie (1) und das Batterieladegerät (2) elektrisch verbunden sind,
das Ladesystem ferner
eine Protokolländerungseinheit, welche dazu angepasst ist, ein Kommunikationsprotokoll zwischen der Batterie (1) und dem Batterieladegerät (2) von einem ersten Protokoll zu einem zweiten Protokoll zu ändern, wenn der zumindest eine Computer die eine Information überschreibt, bei dem das zweite Protokoll eine schnellere Kommunikation vorsieht als das erste Protokoll, und
eine Protokollsteuerungseinheit aufweist, welche dazu angepasst ist, zu bestimmen, ob oder ob nicht es möglich ist, das Kommunikationsprotokoll zwischen der Batterie (1) und dem Batterieladegerät (2) von dem ersten Protokoll zu dem zweiten Protokoll zu ändern, um den Betrieb der Protokolländerungseinheit zu ermöglichen, wenn bestimmt wird, dass die Änderung möglich ist, und den Betrieb der Protokolländerungseinheit zu verhindern,, wenn bestimmt wird, dass die Änderung nicht möglich ist,
bei dem
die erste Information ein Programm ist, das durch den Computer (14) in der Batterie (1) ausgeführt wird, und die zweite Information ein Programm ist, das durch den Computer (25) in dem Batterieladegerät (2) ausgeführt wird, und die Programme zum Steuern des Ladens der Batterie (1) durch den Computer (14) in der Batterie (1) und den Computer (25) in dem Batterieladegerät (2) sind.

2. Ladesystem nach Anspruch 1, bei dem
der Computer in der Batterie ein erster Computer ist, und der Computer in dem Batterieladegerät ein zweiter Computer ist,
der erste Computer dazu angepasst ist, die zweite Information, die in der zweiten Speichereinheit gespeichert ist, die in dem Batterieladegerät (2) vorgesehen ist, zu überschreiben,
der zweite Computer dazu angepasst ist, die erste Information, die in der ersten Speichereinheit gespeichert ist, die in der Batterie (1) vorgesehen ist, zu überschreiben, und
das Ladesystem ferner
eine erste Bestimmungseinheit, die in der Batterie (1) vorgesehen ist, bei dem die erste Bestimmungseinheit dazu angepasst ist, zu bestimmen, ob oder ob nicht die erste Information überschrieben werden soll, basierend auf einem Inhalt der ersten Information und einem Inhalt der zweiten Information,
eine erste Betriebsverhinderungseinheit, die in der Batterie (1) vorgesehen ist, bei dem die erste Betriebsverhinderungseinheit dazu angepasst ist, einen Betrieb des ersten Computers zu verhindern, wenn die erste Bestimmungseinheit bestimmt, dass die erste Information überschrieben werden soll,
eine zweite Bestimmungseinheit, die in dem Batterieladegerät (2) vorgesehen ist, bei dem die zweite Bestimmungseinheit dazu angepasst ist, zu bestimmen, ob oder ob nicht die zweite Information überschrieben werden soll, basierend auf dem Inhalt der ersten Information und dem Inhalt der zweiten Information, und
einer der zweiten Betriebsverhinderungseinheit aufweist, die in dem Batterieladegerät (2) vorgesehen ist, bei dem die zweite Betriebsverhinderungseinheit dazu angepasst ist, einen Betrieb des zweiten Computers zu verhindern, wenn die zweite Bestimmungseinheit bestimmt, dass die zweite Information überschrieben werden soll.

3. Ladesystem nach Anspruch 2, bei dem
die erste Information und die zweite Information eine Aktualisierungsinformation enthalten, welche dazu angepasst ist, Aktualisierungsprotokolle der ersten Information und der zweiten Information anzuzeigen, und
zumindest eine von der ersten Bestimmungseinheit und der zweiten Bestimmungseinheit dazu angepasst ist, sich auf die Aktualisierungsinformation zu beziehen, die in der ersten Information und der zweiten Information enthalten ist, und eine Bestimmung basierend auf der Aktualisierungsinformation zu tätigen.

4. Ladesystem nach einem der Ansprüche 1 bis 3, bei dem
zumindest ein Computer
eine Schreibeinheit, welche dazu angepasst ist, wenn die eine Information überschrieben wird, die andere Information in einen anderen Speicherbereich als den Speicherbereich, in welchem die eine Information gespeichert ist, zu schreiben, in der Speichereinheit von der ersten Speichereinheit und der zweiten Speichereinheit, in welcher die eine Information gespeichert ist, zu schreiben,
eine Erfolgsbestimmungseinheit, welche dazu angepasst ist, zu bestimmen, ob oder ob nicht ein Schreiben durch die Schreibeinheit erfolgreich ist, basierend zumindest auf der anderen Information, die in dem einen Speicherbereich geschrieben wird, und
eine Überschreibungseinheit aufweist, welche dazu angepasst ist, die andere Information, die in dem einem Speicherbereich durch die Schreibeinheit über den anderen Speicherbereich geschrieben ist, bei welchem die eine Information gespeichert ist, zu schreiben, wenn die Ausführungsbestimmungseinheit bestimmt, dass das Schreiben durch die Schreibeinheit erfolgreich ist.

5. Ladesystem nach einem der Ansprüche 1 bis 4, das ferner
zumindest eine Benachrichtigungseinheit aufweist, die zumindest in der Batterie (1) oder dem Batterieladegerät (2) vorgesehen ist, bei dem die zumindest eine Benachrichtigungseinheit dazu angepasst ist, einen Abschluss eines Überschreibens durch den zumindest einen Computer anzuzeigen, wenn das Überschreiben abgeschlossen ist.

6. Ladesystem nach einem der Ansprüche 1 bis 5, das ferner
eine Ladeverhinderungseinheit aufweist, die in dem Batterieladegerät (2) vorgesehen ist, bei dem die Ladeverhinderungseinheit dazu angepasst ist, ein Laden der Batterie (1) zu verhindern, nachdem ein Überschreiben durch den zumindest einen Computer abgeschlossen wurde.

## Revendications

1. Système de charge capable de réécrire des informations, comprenant une batterie (1),
un chargeur de batterie (2) qui est adapté pour charger la batterie (1) en étant connecté électriquement de manière amovible à la batterie (1),
une première unité de stockage (144) prévue dans la batterie (1), la première unité de stockage étant adaptée pour stocker de manière réinscriptible une première information, et
une deuxième unité de stockage (254) prévue dans le chargeur de batterie (2), la deuxième unité de stockage (254) étant adaptée pour stocker de manière réinscriptible une deuxième information,
la batterie (1) et le chargeur de batterie (2) comprenant chacune un ordinateur (14 ; 25), **caractérisé en ce que**
au moins un des ordinateurs (14 ; 25) est adapté pour réécrire l'une quelconque des informations parmi la première information stockée dans la première unité de stockage et la deuxième information stockée dans la deuxième unité de stockage sur la base de l'autre information parmi la première information et la deuxième information lorsque la batterie (1) et le chargeur de batterie (2) sont électriquement connectés,
le système de charge comprenant en outre
une unité de changement de protocole qui est adaptée pour changer un protocole de communication entre la batterie (1) et le chargeur de batterie (2) d'un premier protocole à un deuxième protocole lorsque ledit au moins un ordinateur réécrit ladite information, où le deuxième protocole fournit une communication plus rapide que le premier protocole, et
une unité de commande de protocole qui est adaptée pour déterminer s'il est possible ou non de changer le protocole de communication entre la batterie (1) et le chargeur de batterie (2) du premier protocole au deuxième protocole, pour permettre à l'unité de changement de protocole de fonctionner lorsque un changement est considéré comme possible, et pour empêcher l'unité de changement de protocole de fonctionner lorsque un changement est considéré comme impossible,
où
la première information est un programme à exécuter par l'ordinateur (14) dans la batterie (1), et la deuxième information est un programme à exécuter par l'ordinateur (25) dans le chargeur de batterie (2) et les programmes sont destinés à commander la charge de la batterie (1) par l'ordinateur (14) dans la batterie (1) et l'ordinateur (25) dans le chargeur de batterie (2).

2. Système de charge selon la revendication 1, où
l'ordinateur dans la batterie est un premier ordinateur et l'ordinateur dans le chargeur de batterie est un deuxième ordinateur,
le premier ordinateur est adapté pour réécrire la deuxième information stockée dans la deuxième unité de stockage prévue dans le chargeur de batterie (2),
le deuxième ordinateur est adapté pour réécrire la première information stockée dans la première unité de stockage prévue dans la batterie (1), et
le système de charge comprend en outre
une première unité de détermination prévue dans la batterie (1), la première unité de détermination étant adaptée pour déterminer si la première information doit être réécrire ou non, sur la base du contenu de la première information et du contenu de la seconde information,
une première unité d'inhibition de fonctionnement prévue dans la batterie (1), la première unité d'inhibition de fonctionnement étant adaptée pour inhiber un fonctionnement du premier ordinateur lorsque la première unité de détermination détermine que la première information doit être réécrite,
une deuxième unité de détermination prévue dans le chargeur de batterie (2), la deuxième unité de détermination étant adaptée pour déterminer si la deuxième information doit être réécrite ou pas, sur la base du contenu de la première information et du contenu de la deuxième information, et
une deuxième unité d'inhibition de fonctionnement prévue dans le chargeur de batterie (2), la deuxième unité de fonctionnement étant adaptée pour inhiber un fonctionnement du deuxième ordinateur lorsque la deuxième unité de détermination détermine que la deuxième information doit être réécrite.

3. Système de charge selon la revendication 2, où
la première information et la deuxième information comprennent une information de mise à jour qui est adaptée pour indiquer des historiques de mise à jour de la première information et de la deuxième information, et
au moins une des première et deuxième unités de détermination est adaptée pour se référer aux informations de mise à jour comprises dans la première information et la seconde information, et pour effectuer une détermination basée sur les informations de mise à jour.

4. Système de charge selon l'une quelconque des revendications 1 à 3, dans lequel
au moins un ordinateur comprend
une unité d'écriture qui est adaptée, lors de la réécriture de ladite information, pour écrire l'autre information dans une zone de stockage autre qu'une autre zone de stockage où ladite information est stockée, dans l'unité de stockage parmi la première et la deuxième unité de stockage où ladite information est stockée,
une unité de détermination de succès qui est adaptée pour déterminer si une écriture par l'unité d'écriture réussit ou non, sur la base au moins de l'autre information écrite dans ladite zone de stockage, et
une unité d'écrasement qui est adaptée pour écrire l'autre information écrite dans ladite zone de stockage par l'unité d'écriture sur l'autre zone de stockage où ladite information est stockée, lorsque l'unité de détermination de succès détermine que l'écriture par l'unité d'écriture réussi.

5. Système de charge selon l'une quelconque des revendications 1 à 4, comprenant en outre
au moins une unité de notification prévue dans au moins l'un des éléments parmi la batterie (1) et le chargeur de batterie (2), ladite au moins une unité de notification étant adaptée pour notifier une réécriture terminée par ledit au moins un ordinateur lorsque la réécriture a été terminée.

6. Système de charge selon l'une quelconque des revendications 1 à 5, comprenant en outre
une unité d'amorçage de charge prévue dans le chargeur de batterie (2), l'unité d'amorçage de charge étant adaptée pour amorcer une charge de la batterie (1) après qu'une réécriture par ledit au moins un ordinateur a été achevé.
